# EUROPEAN PATENT APPLICATION

(11) **EP 4 773 326 A1**
(43) Date of publication of application: **08.07.2026**
(21) Application number: 25858670.0
(22) Date of filing: 30.06.2025
(51) Int. Cl.: H01M 10/0587, H01M 10/052

(54) **SECONDARY BATTERY AND ELECTRONIC DEVICE**

(30) Priority: 29.08.2024 CN 202411199327
(71) Applicant: Ningde Amperex Technology Limited, Ningde, Fujian 352100 (CN)
(72) Inventor: WANG, Lisha, Ningde, Fujian 352100 (CN)
(74) Representative: Kraus & Lederer PartGmbB
(86) International application number: PCT/CN2025/105502
(87) International publication number: WO 2026/045624

(57) **Abstract**

A secondary battery and an electronic apparatus are provided. The secondary battery includes a housing made of a metal material, a wound electrode assembly, a first tab, and a first layer. The housing includes a first wall and a first conductive member provided on the first wall. The first tab includes a first extension section, a second extension section, and a third extension section. The first extension section includes a first end connected to a first electrode plate, and the first extension section extends from the first end toward a first side in a thickness direction of the electrode assembly and is inclined with respect to the thickness direction. The second extension section includes a second end connected to the first extension section. Viewed along a third direction, the second extension section extends from the second end toward the first side and is inclined with respect to the thickness direction. The third extension section is electrically connected to the first conductive member and includes a third end connected to the second extension section. A distance between the third end and the first wall is greater than a distance between the second end and the first wall. The first layer is provided on a surface of the second extension section facing the electrode assembly and extends to the first extension section and the third extension section. The reliability can be improved, and the service life can be prolonged.

## Description

### TECHNICAL FIELD

This application relates to the field of energy storage technology, and in particular, to a secondary battery and an electronic apparatus containing the secondary battery.

### BACKGROUND

With the widespread use of consumer electronic products such as laptops, mobile phones, handheld game consoles, tablet computers, power banks, and drones, the requirements for secondary batteries have become increasingly stringent.

A secondary battery typically includes a metal housing, an electrode assembly located inside the metal housing, and a tab electrically connecting the electrode assembly to the metal housing. However, during safety tests such as drop test and tumble test of the secondary battery, the tab is prone to fracture, and the connection between the tab and the electrode assembly or the metal housing may be subjected to relatively large impact, causing the tab to detach from the electrode assembly or the metal housing, thereby reducing the reliability and service life of the secondary battery.

### SUMMARY

In view of the above deficiencies, it is necessary to provide a secondary battery that helps improve the reliability and prolong the service life.

It is also necessary to provide an electronic apparatus containing the above secondary battery.

A first aspect of this application provides a secondary battery, including a housing, an electrode assembly, and a first tab. The housing is made of a metal material, and the housing includes a first wall and a first conductive member provided on the first wall. The electrode assembly and the first tab are provided inside the housing. The electrode assembly has a wound structure and includes a first electrode plate. A thickness direction of the electrode assembly is a first direction. The first direction has a first side and a second side opposite the first side. A direction from the electrode assembly to the first wall is a second direction, and the second direction is perpendicular to the first direction. The first tab includes a first extension section, a second extension section, and a third extension section that are sequentially connected. The first extension section includes a first end connected to the first electrode plate. Viewed along a third direction perpendicular to both the first direction and the second direction, the first extension section extends from the first end toward the first side and in a direction away from the electrode assembly, and the first extension section is inclined with respect to the first direction. The second extension section includes a second end connected to the first extension section. Viewed along the third direction, the second extension section extends from the second end toward the first side and in a direction toward the electrode assembly, and the second extension section is inclined with respect to the first direction. The third extension section includes a third end connected to the second extension section. In the second direction, a distance between the second end and the first wall is L₂, a distance between the third end and the first wall is L₃, L₃ is greater than L₂, and the third extension section is electrically connected to the first conductive member. The secondary battery further includes a first layer, and the first layer includes an insulating material. The second extension section includes a first surface facing the electrode assembly and a second surface facing away from the first surface, and the first layer is provided on the first surface and extends to the first extension section and the third extension section.

In this application, extension directions of the first extension section and the second extension section in the second direction are opposite. Therefore, the first tab as a whole may have a relatively large degree of bending. In this case, when the secondary battery is subjected to safety tests such as drop test and tumble test, and the electrode assembly shifts inside the housing and pulls the first tab, the first tab can provide a relatively large buffer space to disperse mechanical stress, thereby reducing the risk that the first tab fractures when the electrode assembly pulls the first tab, and also reducing the risk that the first tab detaches from the electrode assembly and the first conductive member, which causes a reduction in an output voltage of the secondary battery or even failure to subsequently charge and discharge, thereby improving the reliability and prolonging the service life of the secondary battery. Further, the large degree of bending of the first tab helps increase an surface area of the first tab, thereby reducing internal resistance to satisfy the demand for high-current charge; and allows more dispersed and uniform current distribution on the first tab during charge, so that the heat at the first tab during high-current charge is more dispersed, reducing a risk of local overheating of the first tab and further improving the reliability and prolonging the service life of the secondary battery. Further, the first layer can cooperate with the bent first tab to protect the first tab to further reduce the risk of fracture, thereby maintaining the stability of the electrical connection between the first tab and both the electrode assembly and the first conductive member; and isolate heat from the electrode assembly, further reducing the risk of local overheating of the first tab. The first layer can also electrically isolate the first tab from the second electrode plate of opposite polarity, reducing the risk of short circuit when the first tab contacts the second electrode plate, while reducing corrosion of the first tab in the electrolyte. Therefore, the synergy between the first layer and the first tab can further improve the reliability and prolong the service life of the secondary battery.

In some possible implementations, the secondary battery further includes a second layer, where the second layer includes an insulating material. The second layer is provided on the second surface and extends to the first extension section and the third extension section, and the first layer and the second layer are integrally provided. Thus, the first tab can be protected to further reduce the risk of its fracture, thereby maintaining the stability of the electrical connection between the first tab and both the electrode assembly and the first conductive member. The integral arrangement of the first layer and the second layer can also further reduce corrosion of the first tab in the electrolyte.

In some possible implementations, viewed along the third direction, the third extension section includes a first subsection and a second subsection that are connected, the first subsection extends from the third end toward the first side, and the first subsection is inclined with respect to the first direction. Viewed along the third direction, the second subsection includes a connection end connected to the first subsection, and the second subsection extends from the connection end toward the second side, and the second subsection is electrically connected to the first conductive member. This facilitates the electrical connection between the first conductive member and the third extension section, and enables the first tab as a whole to have a greater degree of bending.

In some possible implementations, in the second direction, a distance between the connection end and the first wall is L₀, and L₀ is smaller than L₂. Thus, the electrical connection between the first conductive member and the third extension section is facilitated, and the connection strength between them is improved.

In some possible implementations, 0.2 mm ≤ L₀ ≤ 0.5 mm, and 0.5 mm ≤ L₂ ≤ 0.8 mm. This facilitates the electrical connection between the first conductive member and the third extension section and improves the connection strength between them.

In some possible implementations, viewed along the second direction, at least part of the first conductive member is provided in the first direction between the second end and the third end. This facilitates the formation of the first tab with a relatively large degree of bending, while also facilitating the electrical connection between the first conductive member and the third extension section and improving the connection strength between them.

In some possible implementations, viewed along the second direction, at least part of the second subsection is provided in the first direction between the second end and the third end. This facilitates the formation of the first tab with a relatively large degree of bending, while also facilitating the electrical connection between the first conductive member and the third extension section and improving the connection strength between them.

In some possible implementations, 1/2 ≤ L₂/L₃. By limiting the lower limit of the ratio of L₂ to L₃, the risk of excessive bending of the first tab can be reduced, thereby reducing a risk of increased local stress in the first tab leading to material fatigue and fracture, reducing a risk of increased internal thermal stress in the first tab leading to local overheating of the first tab, and reducing a risk that the first tab easily detaches from the first conductive member.

In some possible implementations, 0.5 mm ≤ L₂ ≤ 0.8 mm, and 0.9 mm ≤ L₃ ≤ 1.5 mm. In this case, the risk of excessive bending of the first tab can be reduced, thereby reducing a risk of increased local stress in the first tab leading to material fatigue and fracture, reducing a risk of increased internal thermal stress in the first tab leading to local overheating of the first tab, and reducing a risk that the first tab easily detaches from the first conductive member.

In some possible implementations, the secondary battery further includes a first adhesive member, where the first adhesive member bonds with a surface of the first layer facing away from the first tab. The first extension section includes a welding region, and the first extension section is welded to the first electrode plate through the welding region. Viewed along the first direction, the first adhesive member covers the welding region. In this way, the first adhesive member can strengthen protection of the first layer on the first tab, further reducing the risk of its fracture. The first adhesive member can also cover welding burrs in the welding region, reducing a risk that the burrs pierce the separator and cause short circuit due to contact between the first electrode plate and the second electrode plate.

In some possible implementations, the secondary battery further includes a first structural member, where the first structural member includes an insulating material. The first structural member is provided on a side of the second extension section facing away from the electrode assembly. Viewed along the second direction, the first structural member covers the second end. The first structural member can reduce the risk of short circuit due to contact between the second end and the first wall, and the first structural member can provide certain buffering on the electrode assembly.

In some possible implementations, viewed along the third direction, the first extension section has a first curved region, the third extension section has a second curved region, and a curvature of the first curved region is smaller than a curvature of the second curved region. The relatively small curvature of the first curved region facilitates formation of the first tab with a relatively large degree of bending while the risk of short circuit due to contact between the second extension section and the second electrode plate can be reduced. The relatively large curvature of the second curved region facilitates the electrical connection between the first conductive member and the third extension section and improves the connection strength between them.

In some possible implementations, the first extension section is connected to the outermost first electrode plate. This helps further increase the degree of bending of the first tab.

In some possible implementations, a width of the first tab in the third direction is W₁, a width of the first layer in the third direction is W, 2 mm ≤ W₁ ≤ 6 mm, and W₁ < W ≤ 1.5W₁. In this way, the first layer can sufficiently cover the surface of the first tab, thereby cooperating with the first tab to jointly improve the reliability and prolong the service life of the secondary battery. Moreover, the risk of affecting heat dissipation and increasing costs when the first layer is excessively wide can also be reduced.

In some possible implementations, a thickness of the first layer is T, and 100 µm ≤ T ≤ 200 µm. In this way, the first layer can sufficiently cover the surface of the first tab, thereby cooperating with the first tab to jointly improve the reliability and prolong the service life of the secondary battery. Moreover, the risk of affecting heat dissipation and increasing costs when the first layer is excessively thick can also be reduced.

In some possible implementations, the insulating material of the first layer is selected from at least one of polypropylene, polyethylene, polyethylene terephthalate, polyethylene naphthalate, modified polypropylene material, or modified polyethylene material, so that the first layer can be better attached to the surface of the first tab.

In some possible implementations, the housing further includes a second conductive member provided on the first wall. The electrode assembly further includes a second electrode plate. The secondary battery further includes a second tab. The second tab includes a fourth extension section, a fifth extension section, and a sixth extension section that are sequentially connected. The fourth extension section includes a fourth end connected to the second electrode plate. Viewed along the third direction, the fourth extension section extends from the fourth end toward the first side and in a direction away from the electrode assembly, and the fourth extension section is inclined with respect to the first direction. The fifth extension section includes a fifth end connected to the fourth extension section. Viewed along the third direction, the fifth extension section extends from the fifth end toward the first side and in a direction toward the electrode assembly, and the fifth extension section is inclined with respect to the first direction. The sixth extension section includes a sixth end connected to the fifth extension section. In the second direction, a distance between the fifth end and the first wall is L₅, and a distance between the sixth end and the first wall is L₆, L₆ is greater than L₅, and the sixth extension section is electrically connected to the second conductive member. The secondary battery further includes a third layer. The third layer includes an insulating material. The fifth extension section includes a third surface facing the electrode assembly and a fourth surface facing away from the third surface. The third layer is provided on the third surface and extends to the fourth extension section and the sixth extension section.

In this application, the second tab as a whole can have a relatively large degree of bending. In this case, when the secondary battery is subjected to safety tests such as drop test and tumble test, and the electrode assembly shifts inside the housing and pulls the second tab, the risk that the second tab fractures when the electrode assembly pulls the second tab can be reduced, and the risk that the second tab detaches from the electrode assembly and the second conductive member can also be reduced, which causes a reduction in the output voltage of the secondary battery or even failure to subsequently charge and discharge, thereby improving the reliability and prolonging the service life of the secondary battery. In addition, the relatively large degree of bending of the second tab helps increase a surface area of the second tab, thereby reducing internal resistance; and allows more dispersed and uniform current distribution on the second tab during charge, reducing a risk of local overheating of the second tab and further improving the reliability and prolonging the service life of the secondary battery. Furthermore, the third layer can cooperate with the bent second tab to protect the second tab to further reduce the risk of its fracture, thereby maintaining the stability of the electrical connection between the second tab and both the electrode assembly and the second conductive member; and to isolate heat from the electrode assembly, further reducing the risk of local overheating of the second tab. The third layer can also reduce the risk of short circuit due to contact between the second tab and the first electrode plate, while reducing corrosion of the second tab in the electrolyte. Therefore, the synergy between the third layer and the second tab can further improve the reliability and prolong the service life of the secondary battery.

In some possible implementations, the housing further includes a second wall. In the second direction, the second wall is closer to the electrode assembly than the first wall. Thus, a space is provided between the first wall and the electrode assembly for accommodating part of the first conductive member, part of the second conductive member, the first tab, and the second tab, while reducing a space between the second wall and the electrode assembly, thereby increasing an energy density of the secondary battery.

A second aspect of this application provides an electronic apparatus, including a battery compartment. The electronic apparatus further includes the secondary battery as described above, and the secondary battery is accommodated in the battery compartment. The electronic apparatus is powered by the above secondary battery, and the electronic apparatus has improved reliability and a prolonged service life.

### BRIEF DESCRIPTION OF DRAWINGS

The above and/or additional aspects and advantages of this application will become apparent and readily understood from the following description of some embodiments with reference to the accompanying drawings, in which:
FIG. 1 is a schematic structural diagram of a secondary battery provided in an embodiment of this application.
FIG. 2 is a cross-sectional view of the secondary battery shown in FIG. 1 along section line II-II.
FIG. 3 is an enlarged view of a part at position A of the secondary battery shown in FIG. 2.
FIG. 4 is a top view of the secondary battery shown in FIG. 1 with a first wall of the housing removed.
FIG. 5 is a cross-sectional view of the secondary battery shown in FIG. 1 along section line V-V
FIG. 6 is an enlarged view of a part at position B of the secondary battery shown in FIG. 5.
FIG. 7 is a schematic structural diagram of an electronic apparatus provided in an embodiment of this application.

**Reference signs of main components**

| | |
|---|---|
| Electronic apparatus | 1 |
| Housing | 10 |
| First wall | 11 |
| Second wall | 12 |
| Side wall | 13 |
| First conductive member | 14 |
| Second conductive member | 15 |
| Electrode assembly | 20 |
| First electrode plate | 21 |
| Second electrode plate | 22 |
| Separator | 23 |
| First tab | 30 |
| First extension section | 31 |
| Second extension section | 32 |
| First surface | 32A |
| Second surface | 32B |
| Third extension section | 33 |
| Second tab | 40 |
| Fourth extension section | 41 |
| Fifth extension section | 42 |
| Third surface | 42A |
| Fourth surface | 42B |
| Sixth extension section | 43 |
| First layer | 50 |
| Second layer | 51 |
| First adhesive member | 60 |
| Second adhesive member | 61 |
| First structural member | 70 |
| Third layer | 80 |
| Secondary battery | 100 |
| Battery compartment | 101 |
| First opening | 111 |
| Second opening | 112 |
| First region | 201 |
| Second region | 202 |
| First current collector | 210 |
| First active material layer | 211 |
| Second current collector | 220 |
| Second active material layer | 221 |
| First end | 310 |
| First curved region | 311 |
| First straight region | 312 |
| Welding region | 313 |
| Second end | 320 |
| Third end | 330 |
| Second curved region | 331 |
| Second straight region | 332 |
| First subsection | 333 |
| Second subsection | 334 |
| Fourth end | 410 |
| Fifth end | 420 |
| Sixth end | 430 |
| Connection end | 3340 |
| First direction | X |
| Second direction | Y |
| Third direction | Z |
| First side | X1 |
| Second side | X2 |
| Winding central axis | O |
| Winding central plane | P |
| Distance | L₀, L₁, L₂, L₃, L₄, L₅, L₆ |
| Width | W₁, W |
| Thickness | T |

The following detailed description will further illustrate this application with reference to the above drawings.

### DETAILED DESCRIPTION

The technical solutions in some embodiments of this application are clearly and completely described below. It is clear that the described embodiments are some but not all embodiments of this application. Unless otherwise defined, all technical and scientific terms used herein have the same meaning as commonly understood by those skilled in the technical field to which this application belongs. The terms used in the specification of this application are only for the purpose of describing specific embodiments and are not intended to limit this application.

In the following description, some embodiments of this application are described in detail. However, this application may be embodied in many different forms and should not be construed as limitation to the exemplary embodiments set forth herein. Rather, these exemplary embodiments are provided so that this application will be thorough and complete, and will fully convey the scope of the application to those skilled in the art.

In addition, for brevity and clarity, dimensions or thicknesses of various components and layers may be exaggerated in the drawings. Throughout the text, the same reference signs refer to the same elements. As used herein, the terms "and/or" include any and all combinations of one or more of the associated listed items. In addition, it should be understood that when element A is referred to as being "connected" to element B, element A may be directly connected to element B, or intermediate element C may exist and element A and element B may be indirectly connected to each other.

Further, the term "may" when used in describing some embodiments of this application refers to "one or more embodiments of this application".

The professional terms used herein are for the purpose of describing particular embodiments and are not intended to limit this application. As used herein, the singular forms are intended to include the plural forms as well, unless the context clearly indicates otherwise. It should be further understood that the term "include" when used in this specification indicates the presence of stated features, numerical values, steps, operations, elements and/or components, but does not exclude the presence or addition of one or more other features, numerical values, steps, operations, elements, components, and/or combinations thereof.

Spatial relational terms such as "upper" and the like may be used herein for convenience of description to describe the relationship of one element or feature to another element(s) or feature(s) as illustrated in the figures. It should be understood that spatial relational terms are intended to encompass different orientations of the device or apparatus in use or operation in addition to the orientation depicted in the figures. For example, if the device in the figures is turned over, elements described as "above" or "on" other elements or features would then be oriented "below" or "under" the other elements or features. Thus, the exemplary term "upper" may include both "above" and "below" orientations. It should be understood that although the terms "first", "second", "third", and the like may be used herein to describe various elements, components, regions, layers and/or sections, these elements, components, regions, layers and/or sections should not be limited by these terms. These terms are used to distinguish one element, component, region, layer or section from another element, component, region, layer or section. Thus, a first element, component, region, layer or section discussed below could be termed a second element, component, region, layer or section without departing from the teachings of the exemplary embodiments.

In this application, greater-than, less-than, or not-equal design relationships between parameter values require exclusion of reasonable error in measuring equipment.

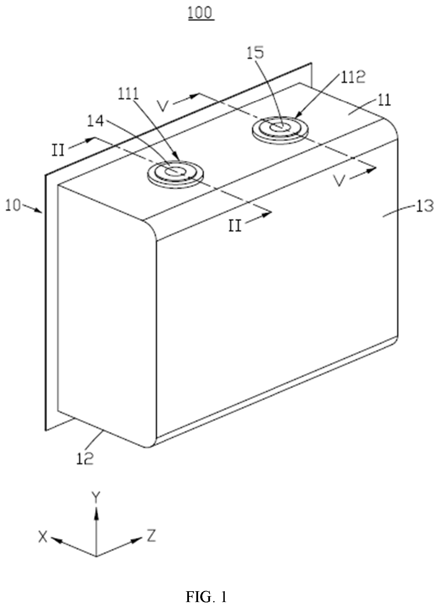

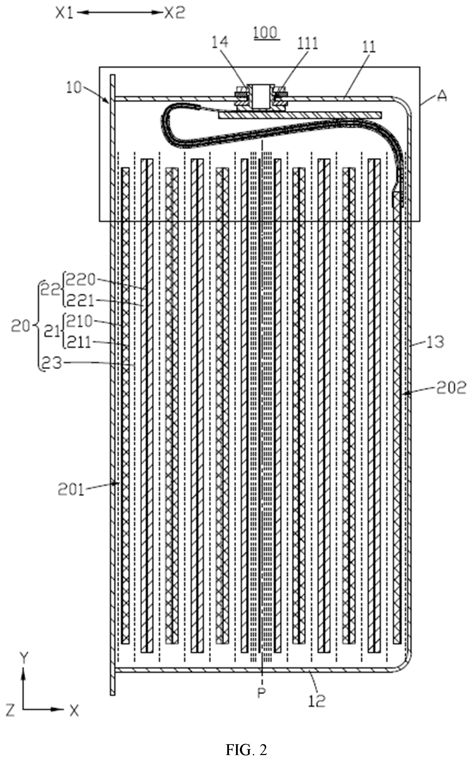

Refer to FIG. 1 and FIG. 2. An embodiment of this application provides a secondary battery 100, including a housing 10, an electrode assembly 20, an electrolyte (not shown in the figure), a first tab 30, and a second tab 40. The housing 10 is made of a metal material. The housing 10 includes a first wall 11, a second wall 12, a side wall 13, a first conductive member 14, and a second conductive member 15. The first wall 11 and the second wall 12 are disposed opposite each other, and the side wall 13 is connected to the first wall 11 and the second wall 12. The first conductive member 14 and the second conductive member 15 are provided on the first wall 11 and electrically isolated from the first wall 11. A surface where the first wall 11 is located may be substantially parallel to a surface where the second wall 12 is located, and a surface where the side wall 13 is located may be substantially perpendicular to the surface where the first wall 11 is located. The first wall 11, the second wall 12, and the side wall 13 enclose an accommodation space, and the electrode assembly 20, the electrolyte, the first tab 30, and the second tab 40 are all accommodated in the accommodation space. In some embodiments, the secondary battery 100 is a prismatic battery. The housing 10 may be entirely made of steel material. For example, the steel housing 10 includes elements Fe and C, and the steel housing 10 may further include one or more of elements Ni, Co, Al, Mn, Cr, Cu, Mg, Mo, S, Si, Ti, V, Pb, Sb, N, and P. As shown in FIG. 1, the first wall 11 is provided with a first opening 111 and a second opening 112 spaced apart, the first conductive member 14 may be mounted to the first opening 111 by bonding or riveting, the second conductive member 15 may be mounted to the second opening 112 by bonding or riveting, and the first conductive member 14 and the second conductive member 15 may specifically be poles. In other embodiments, the secondary battery 100 may be a cylindrical battery, in which case the second conductive member 15 may be omitted.

The electrode assembly 20 has a wound structure and includes a first electrode plate 21, a second electrode plate 22, and a separator 23 provided between the first electrode plate 21 and the second electrode plate 22. The first electrode plate 21, the separator 23, and the second electrode plate 22 are sequentially stacked and wound to form the electrode assembly 20. The separator 23 is configured to prevent direct contact between the first electrode plate 21 and the second electrode plate 22, thereby reducing the risk of short circuit due to contact between the first electrode plate 21 and the second electrode plate 22. There is one first tab 30, which electrically connects the first electrode plate 21 and the first conductive member 14. There is one second tab 40, which electrically connects the second electrode plate 22 and the second conductive member 15. Thus, the first conductive member 14 and the second conductive member 15 may exhibit opposite polarities, enabling the secondary battery 100 to supply power to external components (not shown in the figure). For example, when the first electrode plate 21 is a positive electrode plate and the second electrode plate 22 is a negative electrode plate, the first conductive member 14 exhibits positive polarity and the second conductive member 15 exhibits negative polarity. In other embodiments, when the second conductive member 15 is omitted, the second tab 40 may also electrically connect the second electrode plate 22 and the second wall 12, in which case the housing 10 as a whole exhibits negative polarity. In some embodiments, in the second direction Y, the second wall 12 is closer to the electrode assembly 20 than the first wall 11. Both the first tab 30 and the second tab 40 are provided between the first wall 11 and the electrode assembly 20. Thus, a space is provided between the first wall 11 and the electrode assembly 20 for accommodating part of the first conductive member 14, part of the second conductive member 15, the first tab 30, and the second tab 40, while reducing a space between the second wall 12 and the electrode assembly 20, thereby increasing an energy density of the secondary battery 200.

Herein, a three-dimensional coordinate system is established based on mutually perpendicular first direction X, second direction Y, and third direction Z. In this application, the first direction X is a thickness direction of the electrode assembly 20, and the first direction X has a first side X1 and a second side X2 opposite the first side X1. The second direction Y is the direction from the electrode assembly 20 to the first wall 11, and is a direction of a winding central axis O of the electrode assembly 20 in some embodiments. The third direction Z is a direction from the first conductive member 14 to the second conductive member 15.

As shown in FIG. 2, the first electrode plate 21 includes a first current collector 210 and a first active material layer 211 that are stacked, and the first tab 30 is electrically connected to the first current collector 210. In some embodiments, the first tab 30 may be connected to the first current collector 210 by welding, thereby improving connection strength between the first tab 30 and the first current collector 210. The first electrode plate 21 may be a positive electrode plate or a negative electrode plate. Correspondingly, the first current collector 210 may be a positive electrode current collector or a negative electrode current collector, and the first active material layer 211 may be a positive active material layer or a negative active material layer. The second electrode plate 22 includes a second current collector 220 and a second active material layer 221 that are stacked, and the second tab 40 is electrically connected to the second current collector 220. In some embodiments, the second tab 40 may be connected to the second current collector 220 by welding, thereby improving connection strength between the second tab 40 and the second current collector 220. The second electrode plate 22 may be a negative electrode plate or a positive electrode plate. Correspondingly, the second current collector 220 may be a negative electrode current collector or a positive electrode current collector, and the second active material layer 221 may be a negative active material layer or a positive active material layer. In some embodiments, the first electrode plate 21 is a positive electrode plate, and the second electrode plate 22 is a negative electrode plate.

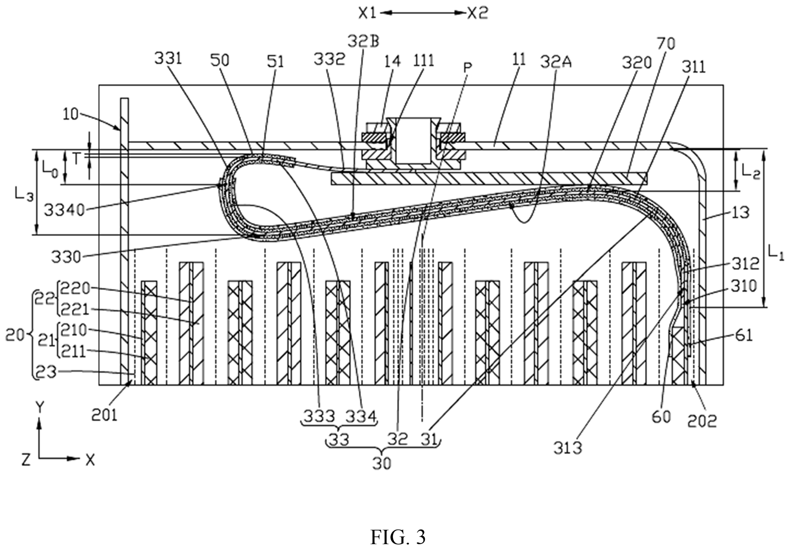

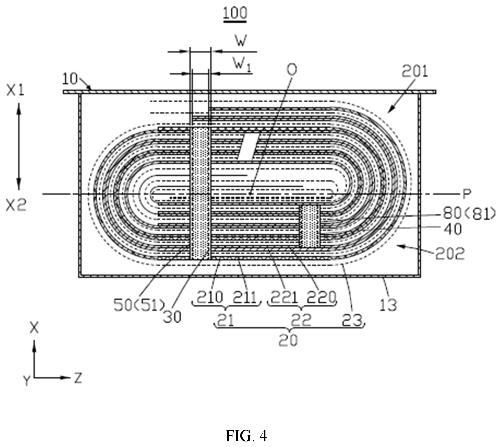

Refer to FIG. 3. The first tab 30 is bent. The first tab 30 includes a first extension section 31, a second extension section 32, and a third extension section 33 that are sequentially connected. The first extension section 31 is connected to the first electrode plate 21, and the first extension section 31 includes a first end 310 connected to the first electrode plate 21. When the first extension section 31 is connected to the first electrode plate 21 by welding, a projection of the first end 310 in the first direction X is located within a projection of the first electrode plate 21 in the first direction X. Viewed along the third direction Z, the first extension section 31 extends from the first end 310 toward the first side X1 and in a direction away from the electrode assembly 20, and the first extension section 31 is inclined with respect to the first direction X. The second extension section 32 includes a second end 320 connected to the first extension section 31. In the second direction Y, a distance L₂ between the second end 320 and the first wall 11 is smaller than a distance L₁ between the first end 310 and the first wall 11. Viewed along the third direction Z, the second extension section 32 extends from the second end 320 toward the first side X1 and in a direction toward the electrode assembly 20, and the second extension section 32 is inclined with respect to the first direction X. The third extension section 33 includes a third end 330 connected to the second extension section 32. In the second direction Y, a distance L₃ between the third end 330 and the first wall 11 is greater than the distance L₂ between the second end 320 and the first wall 11. The third extension section 33 is electrically connected to the first conductive member 14. In some embodiments, the third extension section 33 may be connected to the first conductive member 14 by welding. As shown in FIG. 4, in some embodiments, a plane passing through the winding central axis O and perpendicular to a plane of the first direction X is defined as a winding central plane P, the winding central plane P is a virtual plane that passes through the entire electrode assembly 20 along the second direction Y. Viewed along the third direction Z, the electrode assembly 20 includes a first region 201 and a second region 202 located on two sides of the winding central plane P, a direction from the second region 202 to the first region 201 is defined as the first side X1, and a direction from the first region 201 to the second region 202 is defined as the second side X2. The first extension section 31 is connected to the first electrode plate 21 located in the second region 202. It can be understood that the winding central plane P is only used to divide the structure of the electrode assembly 20 located on two sides of the virtual plane, which does not mean that the electrode assembly 20 located on two sides of the winding central plane P must be strictly symmetrical with respect to the winding central plane P.

In this application, the measurement steps for L₁, L₂, and L₃ may be: (1) performing two-dimensional projection and scanning test on the secondary battery 100 along the third direction Z using X-ray, the instrument may be one known to those skilled in the art (for example, GE Phoenixvtomex S equipment), thereby obtaining a CT image; (2) marking the first end 310, the second end 320, and the third end 330 on the CT image; (3) measuring the distance L₁ between the first end 310 and the first wall 11, the distance L₂ between the second end 320 and the first wall 11, and the distance L₃ between the third end 330 and the first wall 11 in the image. It can be understood that on the CT image obtained along the third direction Z, the second end 320 is a first point having a slope of zero relative to the first direction X from the first extension section 31 to the second extension section 32, and the second end 320 may be regarded as a boundary position between the first extension section 31 and the second extension section 32. The third end 330 is a next point, besides the second end 320, having a slope of zero relative to the first direction X from the second extension section 32 to the third extension section 33, and the third end 330 may be regarded as a boundary position between the second extension section 32 and the third extension section 33.

As shown in FIG. 3, in some embodiments, viewed along the third direction Z, the first extension section 31 has a first curved region 311, the first curved region 311 may be connected to the second end 320, but the first curved region 311 may be spaced apart from the electrode assembly 20 in the second direction Y. For example, the first extension section 31 may further have a first straight region 312 connected to the first curved region 311, the first straight region 312 may extend from the first end 310 to connect with the first curved region 311, and the first extension section 31 is connected to the first electrode plate 21 through the first straight region 312, thereby improving connection strength between the first tab 30 and the first electrode plate 21. The third extension section 33 has a second curved region 331, the second curved region 331 may extend from the third end 330, but the second curved region 331 may be spaced apart from the first conductive member 14 in the first direction X. For example, the second extension section 32 may further have a second straight region 332 connected to the second curved region 331, and the third extension section 33 is connected to the first conductive member 14 through the second straight region 332, thereby improving the connection strength between the first tab 30 and the first conductive member 14. The second extension section 32 may be a straight segment or a curved segment.

The secondary battery 100 further includes a first layer 50, and the first layer 50 contains an insulating material. The second extension section 32 includes a first surface 32A facing the electrode assembly 20 and a second surface 32B facing away from the first surface 32A. The first layer 50 is provided on the first surface 32A and extends to the first extension section 31 and the third extension section 33. In some embodiments, the first layer 50 covers the entire first surface 32A of the second extension section 32. The first layer 50 also extends to the first extension section 31 to at least cover the first curved region 311 of the first extension section 31, and the first layer 50 also extends to the third extension section 33 to at least cover the second curved region 331 of the third extension section 33. In some embodiments, an insulating material of the first layer 50 is selected from at least one of polypropylene, polyethylene, polyethylene terephthalate, polyethylene naphthalate, modified polypropylene material, or modified polyethylene material, so that the first layer 50 can be better attached to a surface of the first tab 30.

In this application, since the second extension section 32 extends from the second end 320 toward the first side X1, and the distance L₃ between the third end 330 and the first wall 11 is greater than the distance L₂ between the second end 320 and the first wall 11, extension directions of the first extension section 31 and the second extension section 32 in the second direction Y are opposite. Therefore, the first tab 30 as a whole may have a relatively large degree of bending. In this case, when the secondary battery 100 is subjected to safety tests such as drop test and tumble test, and the electrode assembly 20 shifts inside the housing 10 and pulls the first tab 30, the first tab 30 can provide a relatively large buffer space to disperse mechanical stress, thereby reducing the risk that the first tab 30 fractures when the electrode assembly 20 pulls the first tab 30, and also reducing the risk that the first tab 30 detaches from the electrode assembly 20 and the first conductive member 14, which causes a reduction in the output voltage of the secondary battery 100 or even failure to subsequently charge and discharge, thereby improving the reliability and prolonging the service life of the secondary battery 100. Further, the large degree of bending of the first tab 30 helps increase an surface area of the first tab 30, thereby reducing internal resistance to satisfy the demand for high-current charge; and allows more dispersed and uniform current distribution on the first tab 30 during charge, so that the heat at the first tab 30 during high-current charge is more dispersed, reducing a risk of local overheating of the first tab 30 and further improving the reliability and prolonging the service life of the secondary battery 100.

Furthermore, since the first layer 50 is provided on the first surface 32A and extends to the first extension section 31 and the third extension section 33, the first layer 50 can cooperate with the bent first tab 30 to protect the first tab 30 to further reduce the risk of fracture, thereby maintaining the stability of the electrical connection between the first tab 30 and both the electrode assembly 20 and the first conductive member 14; and isolate heat from the electrode assembly 20, further reducing the risk of local overheating of the first tab 30. The first layer 50 can also electrically isolate the first tab 30 from the second electrode plate 22 of opposite polarity, reducing the risk of short circuit when the first tab 30 contacts the second electrode plate 22, while reducing corrosion of the first tab 30 in the electrolyte. Therefore, the synergy between the first layer 50 and the first tab 30 can further improve the reliability and prolong the service life of the secondary battery 100.

In some embodiments, the secondary battery 100 further includes a second layer 51, and the second layer 51 includes an insulating material. The second layer 51 is provided on a second surface 32B and extends to the first extension section 31 and the third extension section 33. In some embodiments, the second layer 51 covers the entire second surface 32B of the second extension section 32. The second layer 51 further extends to the first extension section 31 to at least cover the first curved region 311 of the first extension section 31, and the second layer 51 further extends to the third extension section 33 to at least cover the second curved region 331 of the third extension section 33. The first layer 50 and the second layer 51 are integrally provided, for example, the first layer 50 and the second layer 51 are connected integrally at a side of the first tab 30 to wrap the first tab 30 therein, thereby further protecting the first tab 30 and further reducing the risk of fracture, and thereby maintaining the stability of the electrical connection between the first tab 30 and both the electrode assembly 20 and the first conductive member 14. Moreover, the integral arrangement of the first layer 50 and the second layer 51 can further reduce corrosion of the first tab 30 in the electrolyte. In some embodiments, the insulating material of the second layer 51 is selected from at least one of polypropylene, polyethylene, polyethylene terephthalate, polyethylene naphthalate, modified polypropylene material, or modified polyethylene material, and the insulating material of the first layer 50 is the same as the insulating material of the second layer 51.

Refer to FIG. 4. In some embodiments, a width of the first tab 30 in the third direction Z is W₁, a width of the first layer 50 in the third direction Z is W, 2 mm ≤ W₁ ≤ 6 mm, and W₁ < W ≤ 1.5W₁. In this way, the first layer 50 can sufficiently cover the surface of the first tab 30, thereby cooperating with the first tab 30 to jointly improve the reliability and prolong the service life of the secondary battery 100. Moreover, the risk of affecting heat dissipation and increasing costs when the first layer 50 is excessively wide can also be reduced. The width of the second layer 51 may be substantially the same as the width of the first layer 50.

As shown in FIG. 3, in some embodiments, a thickness of the first layer 50 is T, and 100 µm ≤ T ≤ 200 µm. In this way, the first layer 50 can sufficiently cover the surface of the first tab 30, thereby cooperating with the first tab 30 to jointly improve the reliability and prolong the service life of the secondary battery 100. Moreover, the risk of affecting heat dissipation and increasing costs when the first layer 50 is excessively thick can also be reduced. The thickness of the second layer 51 may be substantially the same as the thickness of the first layer 50.

In some embodiments, the first electrode plate 21 forms a multi-layer structure after winding, and the first extension section 31 may be connected to the outermost first electrode plate 21. This helps further increase a degree of bending of the first tab 30. The separator 23 may be the outermost layer of the entire electrode assembly 20. The separator 23 can form a protective layer to avoid the risk of short circuit caused by wear of the electrode plate inside this portion of the separator 23, thereby increasing the mechanical impact resistance of the electrode assembly 20. In other embodiments, the outermost layer of the electrode assembly 20 may be the first electrode plate 21 or the second electrode plate 22.

In some embodiments, in the second direction Y, the distance L₂ between the second end 320 and the first wall 11 and the distance L₃ between the third end 330 and the first wall 11 further satisfy: 1/2 ≤ L₂/L₃. By limiting the lower limit of the ratio of L₂ to L₃, the risk of excessive bending of the first tab 30 can be reduced. When the bending degree of the first tab 30 is excessive, local stress in the first tab 30 increases, easily causing material fatigue and fracture, and internal thermal stress of the first tab 30 also increases accordingly, easily causing local overheating of the first tab 30; in addition, the first tab 30 occupies a relatively large head space of the electrode assembly 20, reducing the energy density and increasing the risk of short circuit due to contact between the first tab 30 and the second electrode plate 22; further, the first tab 30 is prone to detach from the first conductive member 14. In some embodiments, 1.8 mm ≤ L₁ ≤ 2.5 mm, 0.5 mm ≤ L₂ ≤ 0.8 mm, and 0.9 mm ≤ L₃ ≤ 1.5 mm.

In some embodiments, a curvature of the first curved region 311 is smaller than a curvature of the second curved region 331. That is, the bending degree of the first curved region 311 is greater than the bending degree of the second curved region 331. The relatively small curvature of the first curved region 311 facilitates formation of the first tab 30 with a relatively large degree of bending while the risk of short circuit due to contact between the second extension section 32 and the second electrode plate 22 can be reduced. The relatively large curvature of the second curved region 331 facilitates the electrical connection between the first conductive member 14 and the third extension section 33 and improves the connection strength between them. In this application, the measurement steps for curvature may be calculated based on a ratio of an arc length to a radius corresponding to the first curved region 311 or the second curved region 331 on the CT image.

In some embodiments, viewed along the third direction Z, the third extension section 33 includes a first subsection 333 and a second subsection 334 that are connected. The first subsection 333 extends from the third end 330 toward the first side X1, and the first subsection 333 is inclined with respect to the first direction X. Viewed along the third direction Z, the second subsection 334 includes a connection end 3340 connected to the first subsection 333, and the second subsection 334 extends from the connection end 3340 toward the second side X2. A part of the second curved region 331 is located in the first subsection 333, and another part is located in the second subsection 334. The second straight region 332 is located in the second subsection 334. The second subsection 334 is electrically connected to the first conductive member 14, for example, the second subsection 334 may be electrically connected to the first conductive member 14 through the second straight region 332. Providing the third extension section 33 with the first subsection 333 and the second subsection 334 facilitates the electrical connection between the first conductive member 14 and the third extension section 33, and enables the first tab 30 as a whole to have a greater degree of bending. In this case, viewed along the third direction Z, the first tab 30 is substantially bent in an "S" shape.

In some embodiments, in the second direction Y, the distance L₀ between the connection end 3340 and the first wall 11 is smaller than the distance L₂ between the second end 320 and the first wall 11. Thus, the electrical connection between the first conductive member 14 and the third extension section 33 is facilitated, and the connection strength between them is improved. In some embodiments, 0.2 mm ≤ L₀ ≤ 0.5 mm, and 0.5 mm ≤ L₂ ≤ 0.8 mm. In this application, the measurement steps for L₀ may be to obtain a CT image of the secondary battery 100 using the same method, mark the connection end 3340 on the CT image, and then measure the distance L₀ between the connection end 3340 and the first wall 11 from the image. It can be understood that on the CT image, a slope direction of any point on the first subsection 333 is opposite a slope direction of any point on the second subsection 334, so a position of the connection end 3340 (which may be regarded as a boundary position between the first subsection 333 and the second subsection 334) can be determined.

In some embodiments, viewed from the second direction Y, at least part of the first conductive member 14 is provided in the first direction X between the second end 320 and the third end 330. Thus, this facilitates the formation of an S-shaped bent first tab 30 while facilitating the electrical connection between the first conductive member 14 and the third extension section 33 and improving the connection strength between them.

In some embodiments, viewed from the second direction Y, at least part of the second subsection 334 is provided in the first direction X between the second end 320 and the third end 330. More specifically, in some embodiments, the second straight region 332 of the second subsection 334 is provided in the first direction X between the second end 320 and the third end 330. This also facilitates the formation of an S-shaped bent first tab 30, while also facilitating the electrical connection between the first conductive member 14 and the third extension section 33 and improving the connection strength between them.

In some embodiments, the secondary battery 100 may further include a first adhesive member 60, and the first adhesive member 60 bonds with a surface of the first layer 50 facing away from the first tab 30. The first extension section 31 includes a welding region 313, and the first extension section 31 is welded to the first electrode plate 21 through the welding region 313. The welding region 313 may be provided between the first straight region 312 of the first extension section 31 and the first current collector 210. Viewed from the first direction X, the first adhesive member 60 covers the welding region 313. In this way, the first adhesive member 60 can strengthen protection of the first layer 50 on the first tab 30, further reducing the risk of its fracture. The first adhesive member 60 can also reduce the risk that the first layer 50 detaches from the first tab 30. The first adhesive member 60 can also cover welding burrs in the welding region 313, reducing a risk that the burrs pierce the separator 23 and cause short circuit due to contact between the first electrode plate 21 and the second electrode plate 22. The secondary battery 100 may further include a second adhesive member 61, and the second adhesive member 61 bonds with a surface of the second layer 51 facing away from the first tab 30. Viewed from the first direction X, the second adhesive member 61 covers the welding region 313. Thus, the second adhesive member 61 can strengthen protection of the second layer 51 on the first tab 30, further reducing the risk of its fracture. The second adhesive member 61 can also reduce the risk that the second layer 51 detaches from the first tab 30. The second adhesive member 61 can also cover the welding burrs in the welding region 313, reducing the risk that the burrs pierce the housing 10 and causes damage or leakage of the housing 10. The first adhesive member 60 and the second adhesive member 61 may be insulating adhesive tapes.

The secondary battery 100 may further include a first structural member 70, and the first structural member 70 includes an insulating material. The first structural member 70 is provided on a side of the second extension section 32 facing away from the electrode assembly 20. Viewed from the second direction Y, the first structural member 70 covers the second end 320 that is relatively close to the first wall 11. When the second tab 40 electrically connects the second electrode plate 22 and the second wall 12 so that the housing 10 as a whole exhibits negative polarity, the second structural member can reduce the risk of short circuit due to contact between the second end 320 and the first wall 11. Moreover, during safety tests such as drop test and tumble test of the secondary battery 100, the first structural member 70 can provide certain buffering on the electrode assembly 20. The first structural member 70 may be a plate-shaped element, and the insulating material of the first structural member 70 may be selected from at least one of polypropylene, polyethylene terephthalate, polystyrene, polyimide, nylon, or Teflon.

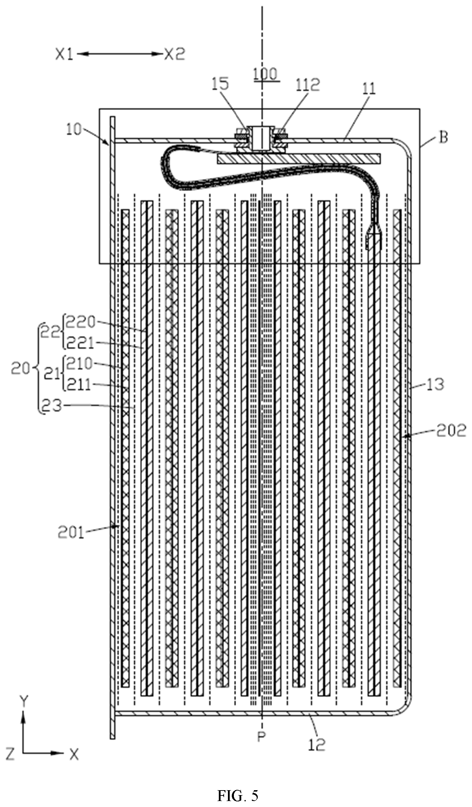

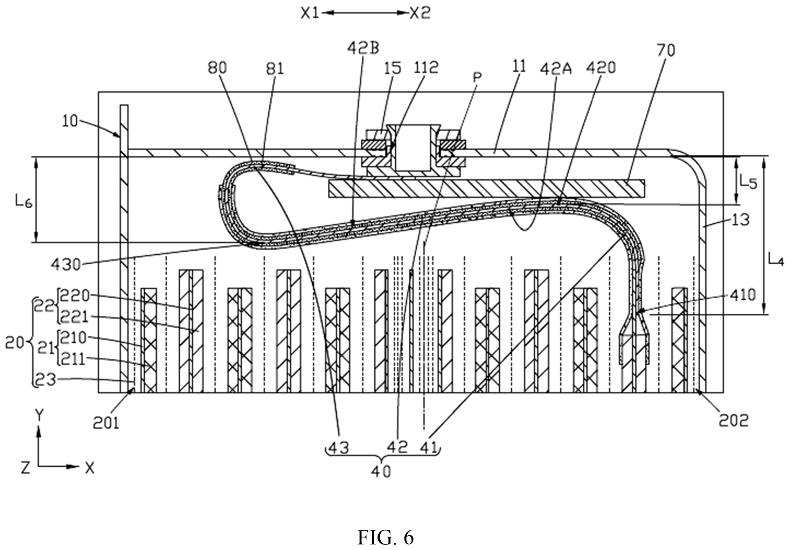

As shown in FIG. 5 and FIG. 6, in some embodiments, the second tab 40 is also bent. The second tab 40 includes a fourth extension section 41, a fifth extension section 42, and a sixth extension section 43 that are sequentially connected. The fourth extension section 41 includes a fourth end 410 connected to the second electrode plate 22. When the fourth extension section 41 is connected to the second electrode plate 22 by welding, viewed along the first direction X, a projection of the fourth end 410 in the first direction X is located within a projection of the second electrode plate 22 in the first direction X. Viewed along the third direction Z, the fourth extension section 41 extends from the fourth end 410 toward the first side X1 and in a direction away from the electrode assembly 20, and the fourth extension section 41 is inclined with respect to the first direction X. The fifth extension section 42 includes a fifth end 420 connected to the fourth extension section 41. In the second direction Y, a distance L₅ between the fifth end 420 and the first wall 11 is smaller than a distance L₄ between the fourth end 410 and the first wall 11. Viewed along the third direction Z, the fifth extension section 42 extends from the fifth end 420 toward the first side X1 and in a direction toward the electrode assembly 20, and the fifth extension section 42 is inclined with respect to the first direction X. The sixth extension section 43 includes a sixth end 430 connected to the fifth extension section 42. In the second direction Y, a distance L₆ between the sixth end 430 and the first wall 11 is greater than the distance L₅ between the fifth end 420 and the first wall 11, and the sixth extension section 43 is electrically connected to the second conductive member 15. In some embodiments, the sixth extension section 43 may be connected to the second conductive member 15 by welding.

The secondary battery 100 further includes a third layer 80, and the third layer 80 includes an insulating material. The fifth extension section 42 includes a third surface 42A facing the electrode assembly 20 and a fourth surface 42B facing away from the third surface 42A, and the third layer 80 is provided on the third surface 42A and extends to the fourth extension section 41 and the sixth extension section 43. In some embodiments, the insulating material of the third layer 80 is selected from at least one of polypropylene, polyethylene, polyethylene terephthalate, polyethylene naphthalate, modified polypropylene material, or modified polyethylene material, so that the third layer 80 can be better attached to the surface of the second tab 40.

In this application, the second tab 40 as a whole can have a relatively large degree of bending. In this case, when the secondary battery 100 is subjected to safety tests such as drop test and tumble test, and the electrode assembly 20 shifts inside the housing 10 and pulls the second tab 40, the risk that the second tab 40 fractures when the electrode assembly 20 pulls the second tab 40 can be reduced, and the risk that the second tab 40 detaches from the electrode assembly 20 and the second conductive member 15 can also be reduced, which causes a reduction in the output voltage of the secondary battery 100 or even failure to subsequently charge and discharge, thereby improving the reliability and prolonging the service life of the secondary battery 100. In addition, the relatively large degree of bending of the second tab 40 helps increase a surface area of the second tab 40, thereby reducing internal resistance; and allows more dispersed and uniform current distribution on the second tab 40 during charge, reducing a risk of local overheating of the second tab 40 and further improving the reliability and prolonging the service life of the secondary battery 100.

Furthermore, since the third layer 80 is provided on the third surface 42A and extends to the fourth extension section 41 and the sixth extension section 43, the third layer 80 can cooperate with the bent second tab 40 to protect the second tab 40 to further reduce the risk of its fracture, thereby maintaining the stability of the electrical connection between the second tab 40 and both the electrode assembly 20 and the second conductive member 15; and to isolate heat from the electrode assembly 20, further reducing the risk of local overheating of the second tab 40. The third layer 80 can also reduce the risk of short circuit due to contact between the second tab 40 and the first electrode plate 21, while reducing corrosion of the second tab 40 in the electrolyte. Therefore, the synergy between the third layer 80 and the second tab 40 can further improve the reliability and prolong the service life of the secondary battery 100.

In some embodiments, viewed along the third direction Z, the sixth extension section 43 has a structure similar to that of the third extension section 33, so that the second tab 40 is substantially bent in an "S" shape. The secondary battery 100 may further include a fourth layer 81, and the fourth layer 81 includes an insulating material. The fourth layer 81 is provided on the fourth surface 42B and extends to the first extension section 31 and the third extension section 33. The third layer 80 and the fourth layer 81 are integrally provided to wrap the second tab 40 therein.

The secondary battery 100 in this application may be a lithium secondary battery, including a lithium metal secondary battery, a lithium-ion secondary battery, a lithium polymer secondary battery, or a lithium-ion polymer secondary battery.

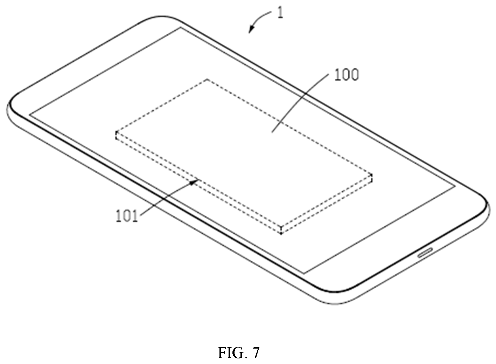

Refer to FIG. 7. An embodiment of this application further provides an electronic apparatus 1, including a battery compartment 101 and a secondary battery 100 provided in the battery compartment 101. The electronic apparatus 1 is powered by the above secondary battery 100, and the electronic apparatus 1 has improved reliability and a prolonged service life. In an embodiment, the electronic apparatus 1 in this application may be, but is not limited to, a laptop computer, a pen-input computer, a mobile computer, an e-book player, a portable telephone, a portable facsimile machine, a portable copier, a portable printer, a stereo headset, a video recorder, a liquid crystal television, a handheld cleaner, a portable CD player, a mini disc, a transceiver, an electronic organizer, a calculator, a memory card, a portable recorder, a radio, a backup power supply, a motor, an automobile, a motorcycle, a power-assisted bicycle, a bicycle, a lighting fixture, a toy, a game console, a clock, a power tool, a flash lamp, a camera, a large household storage battery, or a lithium-ion capacitor.

This application is described in detail below through specific examples and comparative examples. For example, a secondary battery is a lithium-ion secondary battery, a first electrode plate is a positive electrode plate, and a second electrode plate is a negative electrode plate, and this application is described with reference to specific preparation processes and test methods. Those skilled in the art should understand that the preparation methods described in this application are only examples, and any other suitable preparation methods are within the scope of this application.

### Examples 1 to 5

Preparation of first electrode plate: A positive active electrode material lithium cobalt oxide (LiCoO₂), conductive carbon black (Super P), and polyvinylidene fluoride (PVDF) were mixed in a weight ratio of 96.5:1.5:2, and N-methylpyrrolidone (NMP) was added as a solvent to prepare a slurry with a solid content of 75wt%. The mixture was stirred uniformly. Foaming adhesive was pre-applied to part of a surface of a positive electrode current collector, namely aluminum foil, with a thickness of 8 µm. The slurry was uniformly applied to one surface of the aluminum foil, heated to cause the foaming adhesive to fall off so that part of the surface of the aluminum foil was exposed, and then dried at 90°C. The above coating steps were repeated on another surface of the aluminum foil to obtain the positive electrode plate with two coated sides. The initial positive electrode plate was cold-pressed to obtain a positive active material layer with a single coating thickness of 77 µm, and then subjected to processes such as cutting to obtain a positive electrode plate. Then, a first tab was welded to the exposed aluminum foil, and a material of the first tab was aluminum.

Preparation of second electrode plate: A negative active electrode material artificial graphite, silicon-carbon material, conductive carbon black (Super P), polyacrylic acid (PAA) binder, and lithium difluorophosphate (LDPF) were mixed in a weight ratio of 69:5:6:19:1, and deionized water was added as a solvent to prepare a slurry with a weight percentage of 55wt%. The mixture was stirred uniformly. Foaming adhesive was pre-applied to part of a surface of a negative electrode current collector, namely copper foil, with a thickness of 5 µm. The slurry was uniformly applied to one surface of the copper foil, heated to cause the foaming adhesive to fall off so that part of the surface of the copper foil was exposed, then dried at 90°C. The above coating steps were repeated on another surface of the copper foil to obtain a negative electrode plate with two coated sides. The initial negative electrode plate was rolled to obtain a negative active material layer with a coating thickness of 70 µm. Then, a second tab was welded to the exposed copper foil, and a material of the second tab was copper.

Preparation of electrolyte: In a dry argon atmosphere, organic solvents ethylene carbonate (EC), ethyl methyl carbonate (EMC), and diethyl carbonate (DEC) were first mixed in a mass ratio of EC:EMC:DEC=30:50:20, then a lithium salt lithium hexafluorophosphate (LiPF₆) was added to the organic solvent and dissolved and mixed uniformly to obtain an electrolyte with a lithium salt concentration of 1.15 mol/L.

Preparation of separator: A polyethylene (PE) film with a thickness of 9 µm was used.

Preparation of secondary battery: The first electrode plate, the separator, and the second electrode plate were sequentially stacked and wound to obtain the electrode assembly, and then the electrode assembly was placed in a stainless-steel housing. A first extension section of the first tab was connected to the outermost first electrode plate. As shown in FIG. 2 and FIG. 3, a first layer made of polypropylene (PP) was provided on a surface of the first tab, and the first tab was bent into an "S" shape and then welded to the first conductive member. A structure and positional relationship of the first tab and the first layer were not described in detail. The second tab was bent and welded to the second conductive member. Finally, electrolyte injection and packaging were performed to obtain a secondary battery. Distances such as L₀, L₁, L₂, and L₃ were measured through CT images and recorded in Table 1.

### Example 6

The difference from Example 1 was that a second layer made of polypropylene (PP) was provided on the surface of the first tab facing away from the first layer, and the first layer and the second layer were integrally provided.

### Comparative examples 1 and 2

The difference from Example 1 was the relationship between L₂ and L₃.

### Comparative example 3

The difference from Example 1 was that the first tab only included two connected sections, the first section of the first tab was connected to the first electrode plate (with the same extension direction as in Example 1), and the second section of the first tab was bent relative to the first section and then directly welded to the first conductive member.

### Comparative example 4

The difference from Example 1 was that the first layer was omitted.

Then, drop test and temperature rise test were performed on the secondary batteries in each example and comparative example. In each example and each comparative example, 10 secondary batteries were tested, and the corresponding test results were recorded in Table 1.

The drop test steps were as follows: (1) In an environment of 25±5°C, the secondary battery was charged to 100% SOC; (2) the secondary battery was placed in a fixture compartment and was sequentially dropped from a bottom surface, side surface, and top surface of the secondary battery from a height of 1.8 m by an automatic drop device onto a steel plate for one round; and the battery was dropped for a total of 6 rounds, that is, 18 times; and (3) after dropping, the secondary battery was disassembled to observe whether the first tab fractured and whether the first tab detached from the electrode assembly or the first conductive member. If the first tab did not fracture and detach from the electrode assembly and the first conductive member, the secondary battery passed the drop test.

The temperature rise test steps were as follows: (1) In an environment of 25±5°C, the secondary battery was charged at a constant current of 2.0C to 4.25 V, and then charged at a constant voltage to 1.5C; (2) the secondary battery was left standing for 5 min; (3) the secondary battery was charged at a constant current of 1.5C to 4.38 V, and then charged at a constant voltage to 1.0C; (4) the secondary battery was left standing for 5 min; (5) the secondary battery was charged at a constant current of 1.0C to 4.43 V, and then charged at a constant voltage to 0.05C; (6) the secondary battery was left standing for 5 min; and (7) the secondary battery was discharged at a constant current of 0.2C to 3.0 V. Before charge, a multi-channel thermometer was used to test a temperature near the first tab as t₁; and after charge, the secondary battery was disassembled, and a multi-channel thermometer was used to measure a temperature near the first tab as t₂, where the temperature rise Δt = t₂ - t₁. If the temperature rise Δt was lower than 30°C, the secondary battery was considered to pass the temperature rise test. The test results were recorded in Table 1.

**Table 1**

| | L₁ | L₂ | L₃ | L₀ | Relations hip between L₁ and L₂ | Relationshi p between L₂ and L₃ | Value of L₂/L₃ | Relations hip between L₀ and L₂ | First layer | Second layer | Drop test pass rate | Temperat ure rise test pass rate |
|---|---|---|---|---|---|---|---|---|---|---|---|---|
| Example 1 | 2.0 mm | 0.7 mm | 1.4 mm | 0.4 mm | L₂ < L₁ | L₂ < L₃ | 1/2 = L₂/L₃ | L₀ < L₂ | | | 8/10 | 9/10 |
| Example 2 | 2.0 mm | 0.7 mm | 1.05 mm | 0.4 mm | L₂ < L₁ | L₂ < L₃ | 2/3 = L₂/L₃ | L₀ < L₂ | Provid ed | None | 7/10 | 9/10 |
| Example 3 | 2.0 mm | 0.7 mm | 1.75 mm | 0.4 mm | L₂ < L₁ | L₂ < L₃ | L₂/L₃ < 1/2 | L₀ < L₂ | Provid ed | None | 6/10 | 8/10 |
| Example 4 | 2.0 mm | 0.7 mm | 1.4 mm | 0.7 mm | L₂ < L₁ | L₂ < L₃ | 1/2 = L₂/L₃ | L₀ = L₂ | Provid ed | None | 6/10 | 9/10 |
| Example 5 | 2.0 mm | 0.7 mm | 1.4 mm | 0.8 mm | L₂ < L₁ | L₂ < L₃ | 1/2 = L₂/L₃ | L₀ > L₂ | Provid ed | None | 6/10 | 9/10 |
| Example 6 | 2.0 mm | 0.7 mm | 1.4 mm | 0.4 mm | L₂ < L₁ | L₂ < L₃ | 1/2 = L₂/L₃ | L₀ < L₂ | Provid ed | Provid ed | 10/10 | 9/10 |
| Comparativ e example 1 | 2.0 mm | 0.7 mm | 0.7 mm | 0.4 mm | L₂ < L₁ | L₂ = L₃ | 1 = L₂/L₃ | L₀ < L₂ | Provid ed | None | 4/10 | 6/10 |
| Comparativ e example 2 | 2.0 mm | 0.7 mm | 0.6 mm | 0.4 mm | L₂ < L₁ | L₂ > L₃ | 1.1 = L₂/L₃ | L₀ < L₂ | Provid ed | None | 4/10 | 6/10 |
| Comparativ e example 3 | / | / | / | / | / | / | / | / | Provid ed | None | 0/10 | 2/10 |
| Comparativ e example 4 | 2.0 mm | 0.7 mm | 1.4 mm | 0.4 mm | L₂ < L₁ | L₂ < L₃ | 1/2 = L₂/L₃ | L₀ < L₂ | None | None | 2/10 | 5/10 |

In Table 1, the drop test pass rate of n/10 indicates that out of the 10 tested secondary batteries, n secondary batteries passed the test. The meanings of other ratio values are analogous.

From the data in Table 1, it can be learned that compared with Comparative examples 1 to 4, in Example 1, the first tab is bent into an "S" shape and cooperates with the provision of the first layer, to reduce the risk that the first tab in the secondary battery in Example 1 fractures after the drop test, the risk that the first tab detaches from the electrode assembly and the first conductive member, and the risk of local overheating during high-current charge of the secondary battery in Example 1. Therefore, the drop test pass rate and temperature rise test pass rate in Example 1 are relatively higher.

Compared with Example 3, Examples 1 and 2 satisfy 1/2 ≤ L₂/L₃, thereby reducing the risk of excessive bending of the first tab. With the provision of the first layer, the drop test pass rate and temperature rise test pass rate in Examples 1 and 2 are relatively higher.

Compared with Examples 4 and 5, Example 1 satisfies L₀ < L₂. This facilitates the electrical connection between the first conductive member and the third extension section of the first tab, and improves the connection strength between them. Therefore, the drop test pass rate in Example 1 is relatively higher.

Compared with Example 1, in Example 6, the second layer is further provided, so the drop test pass rate in Example 6 is further improved.

The above disclosure is only preferred embodiments of this application, and certainly cannot be used to limit this application. Therefore, equivalent changes made according to this application still fall within the scope covered by this application.

## Claims

1. A secondary battery, comprising a housing, an electrode assembly, and a first tab, wherein the housing is made of a metal material, the housing comprises a first wall and a first conductive member provided on the first wall, and the electrode assembly and the first tab are provided inside the housing, wherein
the electrode assembly has a wound structure and comprises a first electrode plate, a thickness direction of the electrode assembly is a first direction, the first direction has a first side and a second side opposite the first side, a direction from the electrode assembly to the first wall is a second direction, and the second direction is perpendicular to the first direction;
the first tab comprises a first extension section, a second extension section, and a third extension section that are sequentially connected; the first extension section comprises a first end connected to the first electrode plate; viewed along a third direction perpendicular to both the first direction and the second direction, the first extension section extends from the first end toward the first side and in a direction away from the electrode assembly, and the first extension section is inclined with respect to the first direction; the second extension section comprises a second end connected to the first extension section; viewed along the third direction, the second extension section extends from the second end toward the first side and in a direction toward the electrode assembly, and the second extension section is inclined with respect to the first direction; the third extension section comprises a third end connected to the second extension section; and in the second direction, a distance between the second end and the first wall is L₂, a distance between the third end and the first wall is L₃, L₃ is greater than L₂, and the third extension section is electrically connected to the first conductive member; and
the secondary battery further comprises a first layer, the first layer comprises an insulating material, the second extension section comprises a first surface facing the electrode assembly and a second surface facing away from the first surface, and the first layer is provided on the first surface and extends to the first extension section and the third extension section.

2. The secondary battery according to claim 1, wherein the secondary battery further comprises:
a second layer, wherein the second layer comprises an insulating material, the second layer is provided on the second surface and extends to the first extension section and the third extension section, and the first layer and the second layer are integrally provided.

3. The secondary battery according to claim 1 or 2, wherein viewed along the third direction, the third extension section comprises a first subsection and a second subsection that are connected, the first subsection extends from the third end toward the first side, and the first subsection is inclined with respect to the first direction; and viewed along the third direction, the second subsection comprises a connection end(3340) connected to the first subsection, and the second subsection extends from the connection end toward the second side, and the second subsection is electrically connected to the first conductive member.

4. The secondary battery according to claim 3, wherein in the second direction, a distance between the connection end and the first wall is L₀, and L₀ is smaller than L₂.

5. The secondary battery according to claim 3 or 4, wherein viewed along the second direction, at least part of the first conductive member is provided in the first direction between the second end and the third end.

6. The secondary battery according to any one of claims 3 to 5, wherein viewed along the second direction, at least part of the second subsection is provided in the first direction between the second end and the third end.

7. The secondary battery according to any one of claims 1 to 6, wherein 1/2 ≤ L₂/L₃.

8. The secondary battery according to any one of claims 1 to 7, wherein the secondary battery satisfies at least one of the following conditions:
(1) 0.5 mm ≤ L₂ ≤ 0.8 mm, and 0.9 mm ≤ L₃ ≤ 1.5 mm; or
(2) in the second direction, a distance between the connection end and the first wall is L₀, 0.2 mm ≤ L₀ ≤ 0.5 mm, and 0.5 mm ≤ L₂ ≤ 0.8 mm.

9. The secondary battery according to any one of claims 1 to 8, wherein the secondary battery further comprises:
a first adhesive member, wherein the first adhesive member bonds with a surface of the first layer facing away from the first tab; the first extension section comprises a welding region; the first extension section is welded to the first electrode plate through the welding region; and viewed along the first direction, the first adhesive member covers the welding region.

10. The secondary battery according to any one of claims 1 to 9, wherein the secondary battery further comprises:
a first structural member, wherein the first structural member comprises an insulating material, the first structural member is provided on a side of the second extension section facing away from the electrode assembly, and viewed along the second direction, the first structural member covers the second end.

11. The secondary battery according to any one of claims 1 to 10, wherein viewed along the third direction, the first extension section has a first curved region, the third extension section has a second curved region, and a curvature of the first curved region is smaller than a curvature of the second curved region.

12. The secondary battery according to any one of claims 1 to 11, wherein the first extension section is connected to the outermost first electrode plate.

13. The secondary battery according to any one of claims 1 to 12, wherein a width of the first tab in the third direction is W₁, a width of the first layer in the third direction is W, 2 mm ≤ W₁ ≤ 6 mm, and W₁ < W ≤ 1.5W₁.

14. The secondary battery according to any one of claims 1 to 13, wherein a thickness of the first layer is T, and 100 µm ≤ T ≤ 200 µm.

15. The secondary battery according to any one of claims 1 to 14, wherein the insulating material of the first layer is selected from at least one of polypropylene, polyethylene, polyethylene terephthalate, polyethylene naphthalate, modified polypropylene material, or modified polyethylene material.

16. The secondary battery according to any one of claims 1 to 15, wherein the housing further comprises a second conductive member provided on the first wall;
the electrode assembly further comprises a second electrode plate; the secondary battery further comprises a second tab; the second tab comprises a fourth extension section, a fifth extension section, and a sixth extension section that are sequentially connected; the fourth extension section comprises a fourth end connected to the second electrode plate; viewed along the third direction, the fourth extension section extends from the fourth end toward the first side and in a direction away from the electrode assembly, and the fourth extension section is inclined with respect to the first direction; the fifth extension section comprises a fifth end connected to the fourth extension section; viewed along the third direction, the fifth extension section extends from the fifth end toward the first side and in a direction toward the electrode assembly, and the fifth extension section is inclined with respect to the first direction; the sixth extension section comprises a sixth end connected to the fifth extension section; and in the second direction, a distance between the fifth end and the first wall is L₅, a distance between the sixth end and the first wall is L₆, L₆ is greater than L₅, and the sixth extension section is electrically connected to the second conductive member; and
the secondary battery further comprises a third layer, the third layer comprises an insulating material, the fifth extension section comprises a third surface facing the electrode assembly and a fourth surface facing away from the third surface, and the third layer is provided on the third surface and extends to the fourth extension section and the sixth extension section.

17. The secondary battery according to any one of claims 1 to 16, wherein the housing further comprises a second wall, and in the second direction, the second wall is closer to the electrode assembly than the first wall.

18. An electronic apparatus, comprising a battery compartment, wherein the electronic apparatus further comprises the secondary battery according to any one of claims 1 to 17, and the secondary battery is accommodated in the battery compartment.
